# EUROPEAN PATENT SPECIFICATION

(11) **EP 3 043 651 B1**
(45) Date of publication and mention of the grant of the patent: **04.07.2018**
(21) Application number: 14790321.5
(22) Date of filing: 05.09.2014
(51) Int. Cl.: A23C 19/14, A01J 27/00

(54) **METHOD AND APPARATUS FOR CLEANING THE SURFACE OF FOOD PRODUCTS**
VERFAHREN UND VORRICHTUNG ZUR REINIGUNG DER OBERFLÄCHE VON NAHRUNGSMITTELN
PROCÉDÉ ET APPAREIL POUR NETTOYER LA SURFACE DE PRODUITS ALIMENTAIRES

(30) Priority: 09.09.2013 IT MI20131477
(43) Date of publication of application: 20.07.2016
(73) Proprietor: SOL S.p.A., 20900 Monza (IT)
(72) Inventor: DE LORENZI, Lorenzo Emilio, I-20156 Milano (IT)
(74) Representative: Modiano, Micaela Nadia
(86) International application number: PCT/IB2014/064280
(87) International publication number: WO 2015/033300

(56) References cited:
- EP-A1- 1 152 198
- FR-A- 1 326 950
- FR-A1- 2 451 158
- FR-A1- 2 678 141

## Description

The present invention relates to a method and an apparatus for cleaning the surface of food products. The method and the apparatus described herein are particularly but not exclusively useful and practical for cleaning the surface crust of hard cheeses in preparation for the subsequent grating process, during which the crust of the cheese also is processed.

In the food sector, the hygienic and sanitary characteristics of the marketed products have a fundamental role in giving assurance to consumers not only of food having an excellent taste but also of high quality and safety. This aspect of the food sector becomes evident, among the many processes performed by food industries, also during the grating of hard cheese, which allows to obtain ordinary grated cheese.

Cleaning the surface crust of hard cheeses is an indispensable operation prior to grating the cheese proper, since it is necessary to avoid the presence of unwanted substances and/or of residues of such unwanted substances in the finished product (the grated cheese). Such unwanted substances are in fact present on the surface of the cheese after the curing process, during which the formation of molds or fungi is common, and after the product identification process, which is performed by branding and/or by using stencils to apply colors.

Several treatments are currently known by means of which it is possible to clean the crust of hard cheeses. In particular, two main types of treatments for cleaning the crust of cheese are known: treatments for mechanical removal of the crust and treatments for cleaning the crust by means of washes with water.

Mechanical treatments for cleaning the crust of cheese use exclusively knife-like blades that remove physically a surface layer of the crust of the cheese, usually equal to 2-3 millimeters of thickness, in order to ensure complete removal both of the surface substances to be removed and of any markings and colors.

Treatments for cleaning the crust of cheese with water instead provide for at least one pass of the cheese in a water washing tank, also with the optional presence of detergent substances, capable of facilitating the removal of the surface contaminants by using mechanical brushes that clean the crust gently after washing in water. A final drying of the cheese is then necessary, moreover, in order to prevent the formation of molds or fungi which might grow rapidly by way of the film of residual water on the cheese.

FR 2451158 A1 discloses a method for cleaning the surface of hard cheese, comprising a step of applying a jet of hot water in shape of a thin blade, at a certain angle over the surface of the hard cheese block. In general, the above described treatments for cleaning the crust of cheese currently used to clean the crust of hard cheeses are not devoid of drawbacks. In particular, mechanical treatments usually cause significant weight losses of the product (approximately 2-3% on average), consequently causing, in a process of the industrial type that operates on very large quantities, considerable economic losses. Treatments by washing with water instead have problems of fungal contamination due to the use of water, high energy consumption necessary for drying and equally long treatment times, as well as environmental impact problems due to the disposal of the wastewater and to the possible use of detergents.

Furthermore, the treatments currently in use generally do not allow to limit and control the effect of the cleaning treatment on preselected regions of the cheese, forcing the execution of further processing of the cheeses on which sufficient cleaning has not been performed in some regions.

The aim of the present invention is to overcome the limitations of the background art described above, by providing a method and an apparatus for cleaning the surface crust of hard cheeses by removing only the unwanted substances.

Within this aim, an object of the invention is to conceive a method that allows to obtain effects that are similar to, or better than, those that can be obtained with processes of the traditional type, with lower energy consumption and environmental impact.

Another object of the invention is to devise a method that allows to complete the treatment for cleaning the crust of cheeses in a single process step, with the consequent reduction of treatment times.

A further object of the invention is to conceive a method that allows to localize the treatment even in preset regions on the cheese crust in order to achieve uniform cleaning effects.

Furthermore, an object of the present invention is to provide a method that can be performed with an apparatus that can be managed simply and automatically.

Another object of the invention is to provide an apparatus that is highly reliable, relatively easy to provide and at competitive costs.

This aim, as well as these and other objects that will become better apparent hereinafter, are achieved by a method for cleaning the surface of food products, particularly for cleaning the surface crust of hard cheeses, characterized in that it comprises a step of striking at least partially said surface by means of at least one fluid jet, composed of a carrier fluid and solid carbon dioxide.

The intended aim and objects are also achieved by an apparatus for cleaning the surface of food products, particularly for cleaning the surface crust of hard cheeses, characterized in that it comprises means for supporting and moving said food products, at least one nozzle for dispensing a fluid jet, composed of a carrier fluid and solid carbon dioxide, and means for supplying said nozzle, which can be either a hooper for containing pellets of solid carbon dioxide, or a tank for storing liquid carbon dioxide and means for moving said dispensing nozzle.

Further characteristics and advantages of the invention will become better apparent from the description of a preferred but not exclusive embodiment of the apparatus for performing the method according to the invention, illustrated by way of nonlimiting example in the accompanying drawings, wherein:

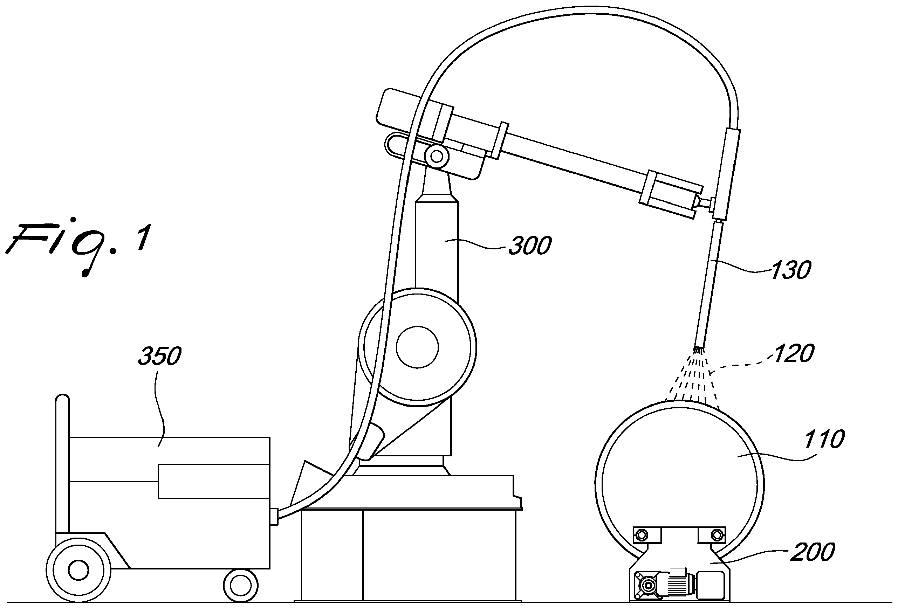

Figure 1 is a schematic view of a possible embodiment of the apparatus for performing the method for cleaning the surface crust of hard cheeses according to the invention;

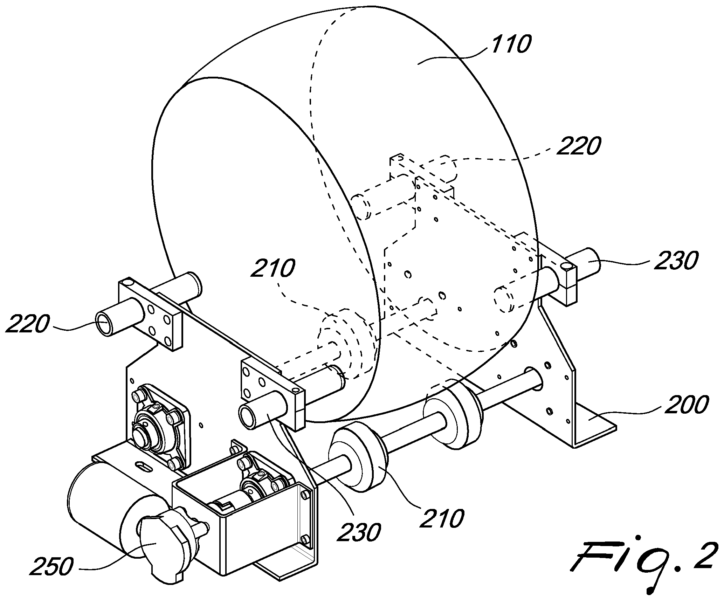

Figure 2 is a detail view of a possible embodiment of the means for the support and automatic movement of the cheese, according to the invention.

With reference to the figures, the method for cleaning the surface crust of hard cheeses according to the invention consists substantially in striking the entire surface of the crust of the hard cheese 110 by means of at least one fluid jet 120. The fluid jet 120 is composed of a carrier fluid, constituted preferably by dehumidified compressed air, with a pressure comprised between 1 and 15 relative bars and preferably comprised between 2 and 10 relative bars, and of pellets or microcrystals of solid carbon dioxide (CO₂).

Solid carbon dioxide pellets are small cylinders that have dimensions preferably with a diameter of approximately 3 millimeters and a length that can vary from a few millimeters to a few centimeters and are scattered within the carrier fluid, so that they are propelled, by means of a dispensing nozzle 130, against the surface of the crust of the cheese 110.

Solid carbon dioxide microcrystals are instead small crystals that have dimensions smaller than 1 millimeter and are generated in special nozzles that are connected directly to a liquid carbon dioxide storage tank. In the same manner as the solid carbon dioxide pellets, they are scattered within the carrier fluid so that they are propelled, by means of a dispensing nozzle 130, against the surface of the crust of the cheese 110.

Conveniently, proximate to the region for the treatment of the cheese 110 that is struck by the fluid jet 120, suction is applied by way of adapted suction means with the dual goal of removing the spent gases generated by the sublimation of the solid carbon dioxide following the impact of the fluid jet 120 against the surface of the cheese 110 and of removing the residues of the material removed from the cheese 110 during the cleaning treatment.

The shape of the fluid jet 120 can be adapted according to the requirements by varying the type of dispensing nozzle 130 used. Thus, for example, the shape of the fluid jet 120 can have a circular cross-section, an elliptical cross-section or a blade-like cross-section.

Furthermore, depending on the cleaning action that one wishes to obtain, on the shape and size of the cheese and on the shape of the fluid jet 120, the jet can be kept fixed with respect to the cheese 110 or can be moved by moving the dispensing nozzle 130.

In turn, the cheese 110 can move by means of a rotation about its own horizontal axis simultaneously with the dispensing of the fluid jet 120, so as to increase the cleaning action and the speed of the cleaning treatment.

Without altering the fact that the dispensing nozzle 130, in performing the method according to the invention, can be supported and optionally moved manually, the method according to the invention is performed preferably by means of an adapted automatic apparatus.

Such apparatus for performing the method according to the invention comprises means 200 for the support and automatic movement of the cheese 110 during cleaning and at least one nozzle 130 for dispensing the fluid jet 120 that is installed on automatic movement means 300, constituted preferably by a 6-axis anthropomorphic robot in a front or lateral position with respect to the cheese 110.

In a preferred embodiment, the means 200 for supporting and moving the cheese 110 comprise a motorized roller belt, which, by means of a bed of rollers 210 arranged substantially horizontally, defines a resting surface for at least one portion of the cheese 110, which can be rotated during the cleaning process by actuating the motor 250 provided for this purpose.

In one embodiment, the motorized roller belt 200 comprises furthermore a pair of rollers 220 arranged upstream of the belt and a pair of rollers 230 arranged downstream of the belt, both pairs being arranged laterally with respect to the cheese 110 (one roller to the right, the other one to the left) but in contact with it. The pairs of rollers 220 and 230 have the function of keeping in correct position the cheese 110, which rests on its own lateral surface, and of facilitating the movement of the cheese 110 about its own horizontal axis during the cleaning treatment.

In this manner, the fluid jet 120 is facilitated in striking the several surfaces of the cheese 110 by means of a preset path. During the rotation of the motorized roller belt 200, the cheese 110 in fact remains in the same position without vertical and/or horizontal movements with respect to its own horizontal axis and rotates exclusively about its own horizontal axis.

In a preferred embodiment, the dispensing nozzle 130, mounted on an anthropomorphic robot 300, is supplied by adapted supply means 350, which can be arranged laterally to the roller belt 200 that allows the rotation of the cheese 110.

The supply means 350 are constituted, in the case of pellets, by a hopper for containing pellets of solid carbon dioxide or, in the case of microcrystals, by a tank for storing liquid carbon dioxide.

The cheese 110, which generally has a cylindrical shape, is placed on the motorized roller belt 200 with resting on the lateral surface thereof, so that it can be struck by the fluid jet 120 on all of its surfaces.

The dispensing nozzle 130, by way of the support of the 6-axis anthropomorphic robot 300 and the simultaneous rotary motion about the horizontal axis of the cheese 110, which is moved by resting on the motorized roller belt 200, is capable of striking with the fluid jet 120 the entire surface of the cheese 110 by means of a preset path and as a function of the dimensional characteristics of the cheese 110, of the need for required surface cleaning treatment and of the desired treatment times.

In one embodiment, the anthropomorphic robot 300 can be adjusted in terms of distance with respect to the position of the cheese 110 on the roller belt 200, so as to vary, according to the processing requirements, the distance of the dispensing nozzle 130 of the fluid jet 120 from the surface of the cheese 110 that is subjected to the cleaning treatment.

In a further embodiment, the dispensing nozzle 130, and therefore the fluid jet 120, can be made to oscillate so as to vary, according to the processing requirements, the angle of the dispensing nozzle 130 with respect to the motorized roller belt 200 and therefore with respect to the cheese 110 deposited thereon.

In a preferred operation of the apparatus in the execution of the method according to the invention, the cheese 110 rotates about its own horizontal axis without lateral movements, by way of the corresponding automatic movement means, such as for example the motorized roller belt 200, and at the same time the dispensing nozzle 130, mounted on the corresponding automatic movement means, such as for example the anthropomorphic robot 300, strikes with the fluid jet 120, preferably composed of solid carbon dioxide (CO₂) in pellets or microcrystals and of dehumidified compressed air, the entire surface of the crust of the cheese 110 by means of a preset path.

Surface removal of the substances that are present on the crust of the cheese occurs by means of the combination of three effects: a physical/mechanical effect due to the impact force and to the abrasion of the fluid jet 120 that contains the pellets or microcrystals of solid carbon dioxide; a thermal effect produced by the rapid and intense cooling produced by contact with the solid carbon dioxide (CO₂) at the temperature of approximately -78°C, which causes the embrittlement of the substances to be removed; and an overpressure effect produced by the sublimation of the pellets or microcrystals of solid carbon dioxide, which occurs at the contact point between the fluid jet 120 and the crust of the cheese 110, during the transition of the carbon dioxide from the solid state to the gaseous state.

The method according to the invention may furthermore combine together the effects described above either in a single pass or in a plurality of passes on the same surface area of the cheese 110 struck by the fluid jet 120 of the dispensing nozzle 130.

The intensity of such effects can be varied, by increasing or decreasing the degree of removal of the substances, in relation to the characteristics of the cheese to be treated, which can require a greater or smaller force for cleaning as a function of the hardness of the crust, or in relation to the need to remove only part of the surface substances. Such variation of the intensity of the described effects can be performed by acting on the following parameters:
flow-rate of compressed air or other carrier fluid supplied to the dispensing nozzle 130;
flow-rate of solid carbon dioxide (CO₂) supplied to the dispensing nozzle 130;
pressure of the compressed air or other carrier fluid fed to the dispensing nozzle 130;
movement speed and direction of motion of the dispensing nozzle 130;
shape of the fluid jet 120 emitted by the dispensing nozzle 130;
distance of the dispensing nozzle 130 from the crust of the cheese 110;
number of the additional nozzles with respect to the dispensing nozzle 130;
speed and type (continuous, stepwise, ...) of the motion of the cheese 110.

It has thus been shown that the invention achieves the intended aim and objects. In particular, it has been shown that the method and the apparatus thus conceived allow to overcome the quality limitations of the background art, since they allow to achieve, with lower costs and with a limited environmental impact, not only effects that can be compared with those that can be obtained with methods of the traditional type, but also innovative and improving effects that can facilitate the innovative development of treatments for cleaning hard cheeses, capable of meeting the most disparate functional requirements during subsequent processing steps, such as for example grating.

Although the method and the apparatus according to the invention have been conceived in particular for cleaning the surface crust of hard cheeses, they can in any case be used more generally for any activity in which it is necessary or in any case useful to clean the surface of the product being cleaned, be it of the food type, such as said cheese, or of another type.

The invention thus conceived is susceptible of numerous modifications and variations, all of which are within the scope of the appended claims. By way of non-limiting example, the person skilled in the art understands without effort that it is possible to provide also a function for logging the activity performed by the apparatus according to the invention, capable for example of counting the number of cheeses processed every day. All the details may further be replaced with other technically equivalent elements.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for cleaning the surface of food products (110), particularly for cleaning the surface crust of hard cheeses, **characterized in that** it comprises a step of striking at least partially said surface by means of at least one fluid jet (120), composed of a carrier fluid and solid carbon dioxide.

2. The method for cleaning the surface of food products (110) according to claim 1, **characterized in that** said solid carbon dioxide is in the form of pellets or microcrystals.

3. The method for cleaning the surface of food products (110) according to claims 1 or 2, **characterized in that** said carrier fluid is constituted by dehumidified compressed air.

4. The method for cleaning the surface of food products (110) according to claims 1, 2 or 3, **characterized in that** it comprises the step of moving said fluid jet (120).

5. The method for cleaning the surface of food products (110) according to one or more of the preceding claims, **characterized in that** it comprises the step of moving said food products (110).

6. The method for cleaning the surface of food products (110) according to claim 5, **characterized in that** said step of moving said food products (110) comprises a rotary motion of said food products (110) about an axis of said food products (110).

7. The method for cleaning the surface of food products (110) according to one or more of the preceding claims, **characterized in that** it comprises the step of aspirating the spent gases generated by the sublimation of said solid carbon dioxide and/or of the residues of the material removed during cleaning.

8. An apparatus for cleaning the surface of food products (110), particularly for cleaning the surface crust of hard cheeses, comprising means (200) for supporting and moving said food products (110), at least one nozzle (130) for dispensing a fluid jet (120) and means (300) for moving said at least one dispensing nozzle (130), and means (350) for supplying said at least one dispensing nozzle (130) of said fluid jet (120), **characterized in that** said supply means (350) comprise a hopper for containing pellets of solid carbon dioxide.

9. An apparatus for cleaning the surface of food products (110), particularly for cleaning the surface crust of hard cheeses, comprising means (200) for supporting and moving said food products (110), at least one nozzle (130) for dispensing a fluid jet (120) and means (300) for moving said at least one dispensing nozzle (130), and means (350) for supplying said at least one dispensing nozzle (130) of said fluid jet (120), **characterized in that** said supply means (350) comprise a tank for storing liquid carbon dioxide

10. The apparatus for cleaning the surface of food products (110) according to claim 8 or 9, **characterized in that** said means (200) for supporting and moving said food products (110) comprise a roller belt provided with a motor (250) and with rollers (210) arranged in a horizontal position.

11. The apparatus for cleaning the surface of food products (110) according to claim 10, **characterized in that** said means (200) for supporting and moving said food products (110) comprise at least one pair of rollers (220-230) arranged laterally with respect to the cheese (110).

12. The apparatus for cleaning the surface of food products (110) according to claims 8 or 9 **characterized in that** said movement means (300) of said at least one dispensing nozzle (130) comprise an anthropomorphic robot (300).

## Patentansprüche

1. Ein Verfahren zur Reinigung der Oberfläche von Nahrungsmitteln (110), insbesondere zur Reinigung der Oberflächenkruste von Hartkäse, **dadurch gekennzeichnet, dass** es einen Schritt des zumindest partiellen Auftreffens mindestens eines Fluidstoßes (120), bestehend aus einem Trägerfluid und Trockeneis, auf die Oberfläche umfasst.

2. Das Verfahren zur Reinigung der Oberfläche von Nahrungsmitteln (110) gemäß Anspruch 1, **dadurch gekennzeichnet, dass** das Trockeneis in Form von Pellets oder Mikrokristallen vorliegt.

3. Das Verfahren zur Reinigung der Oberfläche von Nahrungsmitteln (110) gemäß Anspruch 1 oder 2, **dadurch gekennzeichnet, dass** das Trägerfluid aus entfeuchteter Druckluft besteht.

4. Das Verfahren zur Reinigung der Oberfläche von Nahrungsmitteln (110) gemäß Anspruch 1, 2 oder 3, **dadurch gekennzeichnet, dass** es den Schritt des Bewegens des Fluidstoßes (120) umfasst.

5. Das Verfahren zur Reinigung der Oberfläche von Nahrungsmitteln (110) gemäß einem oder mehreren der obigen Ansprüche, **dadurch gekennzeichnet, dass** es den Schritt des Bewegens der Nahrungsmittel (110) umfasst.

6. Das Verfahren zur Reinigung der Oberfläche von Nahrungsmitteln (110) gemäß Anspruch 5, **dadurch gekennzeichnet, dass** der Schritt des Bewegens der Nahrungsmittel (110) eine Drehbewegung der Nahrungsmittel (110) um eine Achse der Nahrungsmittel (110) umfasst.

7. Das Verfahren zur Reinigung der Oberfläche von Nahrungsmitteln (110) gemäß einem oder mehreren der obigen Ansprüche, **dadurch gekennzeichnet, dass** es den Schritt des Ansaugens der Abgase umfasst, die durch die Sublimation des Trockeneises und/oder der Materialreste, die während des Reinigens entfernt wurden, umfasst.

8. Eine Vorrichtung zur Reinigung der Oberfläche von Nahrungsmitteln (110), insbesondere zur Reinigung der Oberflächenkruste von Hartkäse, Folgendes umfassend:
Mittel (200) zum Tragen und Bewegen der Nahrungsmittel (110), mindestens eine Düse (130) zum Abgeben eines Fluidstoßes (120) und Mittel (300) zum Bewegen der mindestens einen Abgabedüse (130), und Mittel (350) zur Versorgung der mindestens einen Abgabedüse (130) des Fluidstoßes (120), **dadurch gekennzeichnet, dass** die Versorgungsmittel (350) einen Behälter zur Aufnahme von Trockeneispellets umfassen.

9. Eine Vorrichtung zur Reinigung der Oberfläche von Nahrungsmitteln (110), insbesondere zur Reinigung der Oberflächenkruste von Hartkäse, die Folgendes umfasst: Mittel (200) zum Tragen und Bewegen der Nahrungsmittel (110), mindestens eine Düse (130) zum Abgeben eines Fluidstoßes (120) und Mittel (300) zum Bewegen der mindestens einen Abgabedüse (130), und Mittel (350) zur Versorgung der mindestens einen Abgabedüse (130) des Fluidstoßes (120), **dadurch gekennzeichnet, dass** die Versorgungsmittel (350) einen Behälter zur Lagerung von flüssigem Kohlendioxid umfassen.

10. Die Vorrichtung zur Reinigung der Oberfläche von Lebensmitteln (110) gemäß Anspruch 8 oder 9, **dadurch gekennzeichnet, dass** die Mittel (200) zum Tragen und Bewegen der Nahrungsmittel (110) ein Rollenband umfassen, das mit einem Motor (250) und mit in einer horizontalen Position angeordneten Rollen (210) ausgestattet ist.

11. Die Vorrichtung zur Reinigung der Oberfläche von Lebensmitteln (110) gemäß Anspruch 10, **dadurch gekennzeichnet, dass** die Mittel (200) zum Tragen und Bewegen der Lebensmittel (110) mindestens ein Paar von Rollen (220-230) umfassen, die seitlich vom Käse (110) angeordnet sind.

12. Die Vorrichtung zur Reinigung der Oberfläche von Lebensmitteln (110) gemäß Anspruch 8 oder 9, **dadurch gekennzeichnet, dass** die Bewegungsmittel (300) der mindestens einen Abgabedüse (130) einen anthropomorphen Roboter (300) umfassen.

## Revendications

1. Procédé de nettoyage de la surface de produits alimentaires (110), en particulier pour nettoyer la croûte en surface de fromages à pâte dure, **caractérisé en ce qu'**il comprend une étape consistant à frapper au moins partiellement ladite surface avec au moins un jet de fluide (120), constitué d'un fluide porteur et de dioxyde de carbone solide.

2. Procédé de nettoyage de la surface de produits alimentaires (110) selon la revendication 1, **caractérisé en ce que** ledit dioxyde de carbone solide se présente sous la forme de pastilles ou de microcristaux.

3. Procédé de nettoyage de la surface de produits alimentaires (110) selon les revendications 1 ou 2, **caractérisé en ce que** ledit fluide porteur est constitué d'air comprimé déshumidifié.

4. Procédé de nettoyage de la surface de produits alimentaires (110) selon les revendications 1, 2, ou 3, **caractérisé en ce qu'**il comprend l'étape de déplacement dudit jet de fluide (120).

5. Procédé de nettoyage de la surface de produits alimentaires (110) selon une ou plusieurs des revendications précédentes, **caractérisé en ce qu'**il comprend l'étape de déplacement desdits produits alimentaires (110).

6. Procédé de nettoyage de la surface de produits alimentaires (110) selon la revendication 5, **caractérisé en ce que** ladite étape de déplacement desdits produits alimentaires (110) comprend un mouvement de rotation desdits produits alimentaires (110) autour d'un axe desdits produits alimentaires (110).

7. Procédé de nettoyage de la surface de produits alimentaires (110) selon une ou plusieurs des revendications précédentes, **caractérisé en ce qu'**il comprend l'étape d'aspiration des gaz usés générés par la sublimation dudit dioxyde de carbone solide et/ou des résidus de la matière retirée pendant le nettoyage.

8. Dispositif de nettoyage de la surface de produits alimentaires (110), en particulier pour nettoyer la croûte en surface de fromages à pâte dure, comprenant des moyens (200) destinés à porter et déplacer lesdits produits alimentaires (110), au moins une buse (130) pour distribuer un jet de fluide (120) et un moyen (300) pour déplacer ladite buse de distribution (130), au nombre d'au moins une, et des moyens (350) pour alimenter ladite buse de distribution (130), au nombre d'au moins une, avec ledit jet de fluide (120), **caractérisé en ce que** lesdits moyens d'alimentation (350) comprennent une trémie destinée à contenir des pastilles de dioxyde de carbone solide.

9. Dispositif de nettoyage de la surface de produits alimentaires (110), en particulier pour nettoyer la croûte en surface de fromages à pâte dure, comprenant des moyens (200) destinés à porter et déplacer lesdits produits alimentaires (110), au moins une buse (130) pour distribuer un jet de fluide (120) et un moyen (300) pour déplacer ladite buse de distribution (130), au nombre d'au moins une, et des moyens (350) pour alimenter ladite buse de distribution (130), au nombre d'au moins une, avec ledit jet de fluide (120), **caractérisé en ce que** lesdits moyens d'alimentation (350) comprennent un réservoir destiné à stocker du dioxyde de carbone liquide.

10. Dispositif de nettoyage de la surface de produits alimentaires (110) selon la revendication 8 ou 9, **caractérisé en ce que** lesdits moyens (200) destinés à porter et déplacer lesdits produits alimentaires (110) comprennent un convoyeur à rouleaux doté d'un moteur (250) et de rouleaux (210) disposés dans une position horizontale.

11. Dispositif de nettoyage de la surface de produits alimentaires (110) selon la revendication 10, **caractérisé en ce que** lesdits moyens (200) destinés à porter et déplacer lesdits produits alimentaires (110) comprennent au moins une paire de rouleaux (220-230) disposés latéralement par rapport au fromage (110).

12. Dispositif de nettoyage de la surface de produits alimentaires (110) selon les revendications 8 ou 9, **caractérisé en ce que** lesdits moyens de déplacement (300) de ladite buse de distribution (130), au nombre d'au moins une, se composent d'un robot anthropomorphe (300).
